# EUROPEAN PATENT APPLICATION

(11) **EP 4 637 110 A1**
(43) Date of publication of application: **22.10.2025**
(21) Application number: 25170031.6
(22) Date of filing: 11.04.2025
(51) Int. Cl.: H04L 65/1033, H04L 65/1046, H04L 65/1069, H04L 65/80

(54) **ADDING A SERVER TO A CALL**

(30) Priority: 19.04.2024 US 202418641249
(71) Applicant: Microsoft Technology Licensing, LLC, Redmond, WA 98052 (US)
(72) Inventor: PIERREPONT, Timothy James, Redmond, Washington, 98052 (US); TYLEE, Andrew John, Redmond, Washington, 98052 (US); HAYWARD, Anthony Brian, Redmond, Washington, 98052 (US); TREGENZA DANCER, Colin, Redmond, Washington, 98052 (US)
(74) Representative: CMS Cameron McKenna Nabarro Olswang LLP

(57) **Abstract**

A network element receives a call between a first and second party on an original call path. The call comprises a signaling flow and a media flow. The network element determines that a server is to be added to the call, and then adds the server to the call by redirecting the media flow from the network element via the server. Determining that the server is to be removed from the call is achieved by any of: receiving a request from an orchestrator, receiving information about a failure of the server, receiving information about a performance drop in a communications link between the server and the network element. In response to determining that the server is to be removed from the call, the network element then returns the media flow to the original path of the call. The signaling flow is maintained on the original path.

## Description

### BACKGROUND

Modern telephony calls in a voice over internet protocol ("VOIP") network involve transmitting a call between two parties, using a number of intermediate network elements such as servers that process and handle the call. These servers have many roles in the network. Some of the roles are directly related to the call such as providing a path for data of the call to flow between the two parties, directing the call to the intended recipient, or adding call services such as announcements or music on hold to the call. Other roles of a network element include the role of session border controller. A session border controller (SBC) is a network element deployed to protect a VoIP network. SBCs may be part of a service provider network and may be designed primarily to secure the network by verifying users on a call or preventing malicious access to an inner network. Modern SBCs also offer other functions that facilitate calls.

The examples described below are not limited to implementations which solve any or all of the disadvantages of known ways of providing services to VoIP calls.

### SUMMARY

The following presents a simplified summary of the disclosure in order to provide a basic understanding to the reader. This summary is not intended to identify key features or essential features of the claimed subject matter nor is it intended to be used to limit the scope of the claimed subject matter. Its sole purpose is to present a selection of concepts disclosed herein in a simplified form as a prelude to the more detailed description that is presented later.

Inserting a server into a call path may lead to dropped calls due to unreliability of the server or the connections to it. In various examples there is a way of adding a server to a call that enables the call to be maintained despite unreliability of the server such as server failure or server performance drop during the call.

In various examples there is a network element for use in a telephony network. The network element includes a processor and a memory storing instructions that, when executed by the processor, perform a method. The method includes receiving a call between a first and second party on an original call path. The call comprises a signaling flow and a media flow. The network element determines that a server is to be added to the call, by virtue of a message received from the server, and then adds the server to the call by redirecting the media flow from the network element to the server and then from the server to the network element. The network element determines that the server is to be removed from the call by any of: receiving a request from an orchestrator, receiving information about a failure of the server, receiving information about a performance drop in a communications link between the server and the network element. In response to determining that the server is to be removed from the call, the network element then returns the media flow to the original path of the call. The signaling flow is maintained on the original path during the redirecting of the media flow from the network element to the server.

Many of the attendant features will be more readily appreciated as the same becomes better understood by reference to the following detailed description considered in connection with the accompanying drawings.

### DESCRIPTION OF THE DRAWINGS

The present description will be better understood from the following detailed description read in light of the accompanying drawings, wherein:
FIG. 1a is a schematic diagram which illustrates a telephony call between two parties flowing through a network element, with an unreliable server that is not currently part of the call;
FIG. 1b is a schematic diagram illustrating the same call, one directional call to the unreliable server.
FIG. 2 is a schematic diagram which illustrates the same call after the network element has redirected the media flow to the unreliable server;
FIG. 3 is a schematic diagram which illustrates a failure mode of the unreliable server where the unreliable server fails;
FIG. 4 is a schematic diagram which illustrates the response to the failure where the media flow is returned to the network element, and the unreliable server removed from the call;
FIG. 5 is a schematic diagram which illustrates the continuation of the call after the method has been completed;
FIG. 6 is a schematic diagram which illustrates an arrangement where the network element and unreliable server are part of a service provider's network;
FIG. 6b is a schematic diagram which illustrates a failure mode of the unreliable server where the unreliable server degrades the media flow;
FIG. 6c is a schematic diagram which illustrates a failure mode of the unreliable server where the unreliable server informs the network element of a problem;
FIG. 7 is a schematic diagram which illustrates an arrangement where the network element is part of a service provider's network, and the unreliable server is in a cloud compute environment;
FIG. 8 is a flow diagram which illustrates an example of the method implemented on the network element; and
FIG. 9 is a schematic diagram which illustrates an exemplary computing-based device in which a network element may be implemented.
Like reference numerals are used to designate like parts in the accompanying drawings.

### DETAILED DESCRIPTION

The detailed description provided below in connection with the appended drawings is intended as a description of the present examples and is not intended to represent the only forms in which the present examples are constructed or utilized. The description sets forth the functions of the examples and the sequence of operations for constructing and operating the examples. However, the same or equivalent functions and sequences may be accomplished by different examples.

In various examples, advanced call services can be provided to a call in a telephony network. These services generally use specialized compute resource, often in the form of dedicated or specialized servers. If the service alters or inspects the media, then these servers access the call flow, specifically the media flow, in order to make these changes.

It is recognized that issues emerge if the servers are simply included in the call path, as some of these specialized servers are unreliable for various reasons. Unreliability means that the server, or connections to it, are known or suspected to be more prone to failure than the rest of the telephony network, and that therefore adding the server to calls can jeopardize, or potentially jeopardize, the call. This can manifest in many ways. Potential failures here include failure of the unreliable server itself (i.e. an error or resource constraint on the server itself); as well as failure or loss of network connection to or from the server; or degradation of the network connection to or from the server (i.e. packet loss, or jitter). Thus, adding servers to a call may cause issues by adding latency to the call, degrading media, or even risk ending the call prematurely. Whilst failures on the media flow may be recoverable as media changes can be made during the call, if the signaling flow of the call is directed to a server which suffers an error and stops responding predictably the call may be left in an unrecoverable state as the network assumes the call is being processed whilst the server has failed. A partial solution is to fork the call to the sever, which gives it read only access to the media (and signaling) flow, but this only enables passive services, not those which require the ability to modify the media. This specification describes a solution which gives access to the media to an unreliable server, whilst ensuring the signaling, and thus the call, does not fail if the unreliable server suffers an error. In various examples, a media flow of a call is redirected via an unreliable server, whilst a signaling flow of a call remains on an original call path (not via the unreliable server). In this way the unreliable server has access to the media flow and yet the call may be maintained if the unreliable server fails; by redirecting the media flow along the same path as the signaling flow.

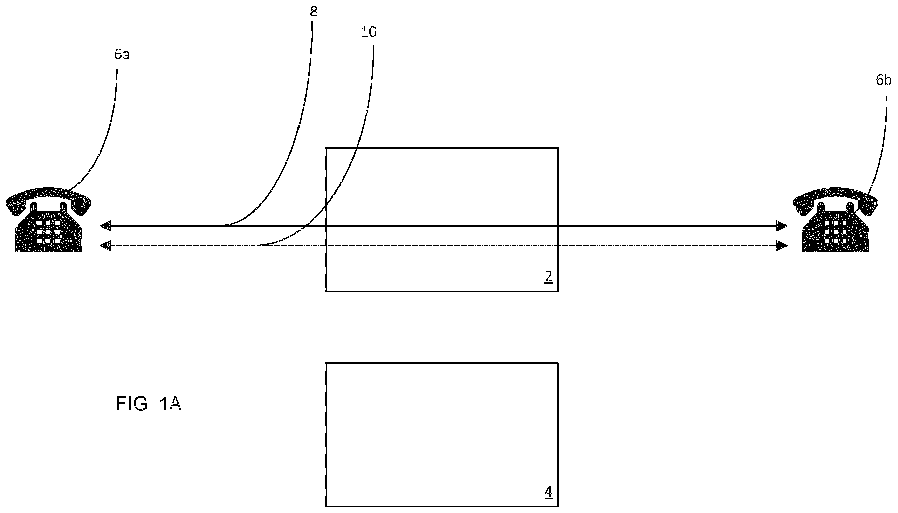

FIG. 1a illustrates the initial state of a network. A VOIP call flows between a first party and a second party, 6a and 6b, through a telephony network. The call comprises two bidirectional flows of packets between the parties, a signaling flow, 8, and a media flow, 10. Taken together these comprise the call, and the path they take through the network is the "call path".

There also exists a network element, 2, on the call path which processes the call. This could be, for example, an SBC which receives the call, performs transcoding, then passes it into the network; or an application server which receives the call and determines whether to apply call services; or a simple proxy which receives and passes through the call to the next hop in its path through the network with no further processing. As will be understood, some networks will feature many such network elements, both in that there will be more than one instance of each type of network element, and a series of many different types of network element that process the call as it passes through the network. One network element is depicted for simplicity.

The signaling flow, 8, is comprised of a sequence of machine-readable messages which instruct the network how the call will be processed, and document features of the call for use in processing. Example contents of signaling messages are the details on the sending and receiving parties to enable routing; information about the media format to facilitate transcoding or processing; information on the devices involved; user preferences; instructions to the network on required atypical call processing; and anything else that is needed to allow the network to handle the call. Some information is provided by the parties, 6a and 6b, or their devices; some assumed by static configuration; and some added or altered by the network as processing proceeds. As the network comprises multiple network elements not depicted, the signaling messages allow the network to pass instructions between the various network elements as well as comprising the instruction from the parties, 6a and 6b, and their devices. Various formats are possible, but a common format of such messages is Session Initiation Protocol (SIP) which is a commonly used standardized format for the sequence of machine-readable messages.

The media flow, 10, is the payload of the call, and comprises a bidirectional sequence of packets of data which comprise the media of the call. The media of the call may comprise multiple sequences of packets, such as an audio flow and a video flow, but one is depicted for simplicity. The signaling flow exists to ensure the media flow passes between the two parties.

Also depicted is an unreliable server, 4, which is not initially part of the call path. This server provides additional processing capabilities that allows additional functionality to be delivered by the network. It could be, for example, an application server, an announcement server, or a server that implements an artificial intelligence model or an interface to the same. If added to the call flow, the unreliable server enables the call to use this additional functionality. However, as an unreliable server, there are issues in adding the server to the call path. Specifically, if the server is part of the call path and suffers a failure, the failure negatively impacts the call. In extreme failure, the unreliable server prevents the call from continuing as flows directed to the unreliable server are not sent on or correctly processed.

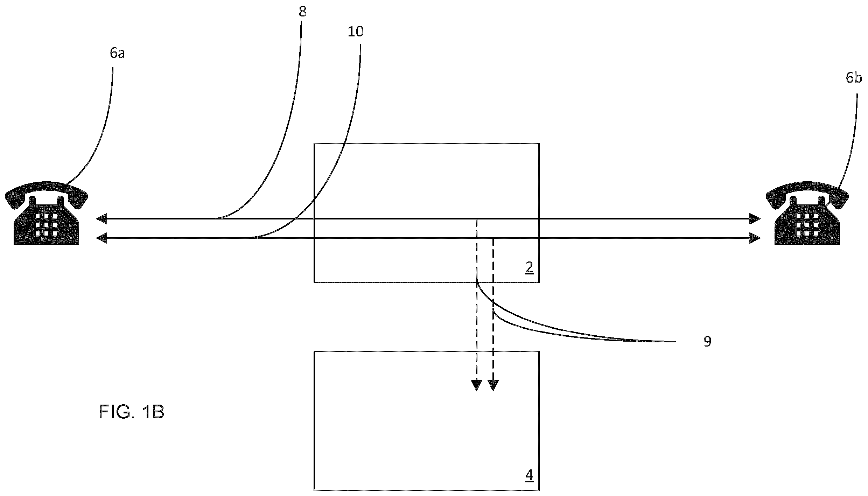

A partial solution, depicted in FIG. 1b, is described with reference to the process of SIP Recording ("SIPREC"). In this case, the network element forks the two flows, duplicating flows 8 and 10, and setting up two new independent flows as depicted by dashed lines 9. These duplicated flows, 9 are sent to the unreliable server and the original flow continues between the two parties (for both signaling and media) preserving the initial arrangement. The dashed redirected flows, 9, are thus independent of the rest of the call. This allows the unreliable server to receive the call, however, it limits the processing that the unreliable server performs to that which is done passively, such as recording, logging, or billing. This is because any alterations or processing performed on the received flows will not affect flows 8 and 10 which continues between the two parties.

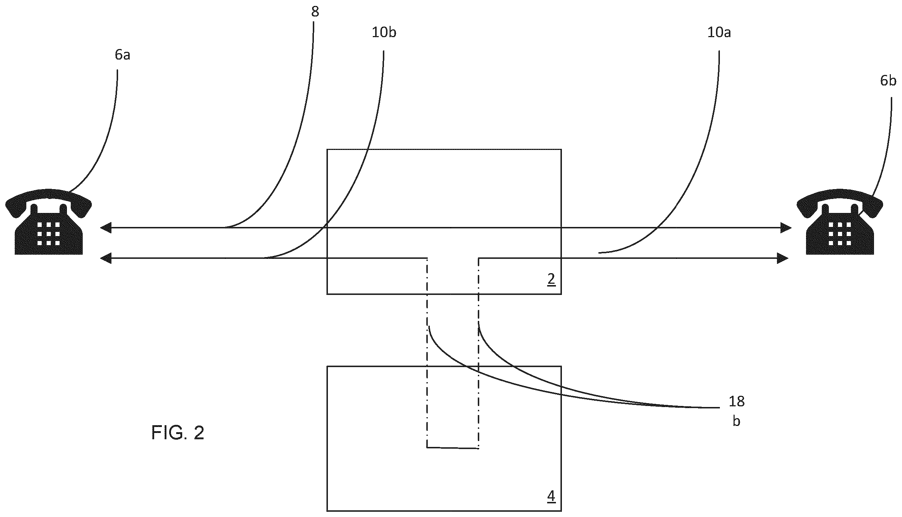

FIG. 2 illustrates an example of the present technology. In this case, the call proceeds as with FIG 1b. The network element, 2, receives and passes through the two flows, 8 and 10. However, the unreliable server determines that it is to be added to the media flow of call either due to the results of the unreliable servers' inspecting of the media flow, or by use of some other configuration that indicates under what circumstances the server should be added. As a result, the media flow, 10, is redirected via the unreliable server. There is no change to the route of the signaling flow, 8, which is passed through the network element as in FIG 1a. The redirection of the media flow starts from a position of the network element by receiving the media from the two parties, as depicted by portions 10a and 10b of flow 10. The network element then redirects the media along 10c and 10d to the unreliable server. The unreliable server is thus in a position to process the media of the call, and unlike the partial solution depicted in 1b, any alterations made to media flow 10 will pass between the parties.

To provide a specific example, call setup to the network element proceeds as per RFC7866, which covers basic SIPREC. During normal operation of a SIPREC call, two media streams are set up, 10c and 10d, are each used to forward media from one endpoint involved in the call to the SIPREC server, in this case the unreliable server. These, counter to the media flow generally, are unidirectional. They are established with the a=sendonly Session Description Protocol ("SDP") attribute. This is sufficient to fork media towards the unreliable server, such that it receives it for analysis.

In the SIP specification, the unreliable server 4 is permitted to renegotiate the forked flow to the unreliable server at any time using standard SIP rules. This will typically be an INVITE or an UPDATE request from unreliable server 4 to network element 2, containing SDP with the same media streams, but now set to a=sendrecv to set up the full redirect. Ordinarily in SIPREC this request for bidirectional media would be ignored, but in the present technology this is an indication to the network element that the unreliable server wishes to be in the media path. There are still two media streams between the network element and the unreliable server, but they are now bi-directional. Media received by the unreliable server on one stream is processed as desired, and then forwarded back on the other stream. Naturally, other methods and message formats are possible, but the above uses standard, well established protocol messages in new ways, and thus minimizes changes that are needed for existing networks to support the technology.

Using the network element to send the media flow but not the signaling flow of a call via an unreliable server enables the network element to operate in an unconventional manner to achieve reliable calls even where a service from an unreliable server uses the media of the call.

The sending of the media flow via the unreliable server improves the functioning of the underlying network element.

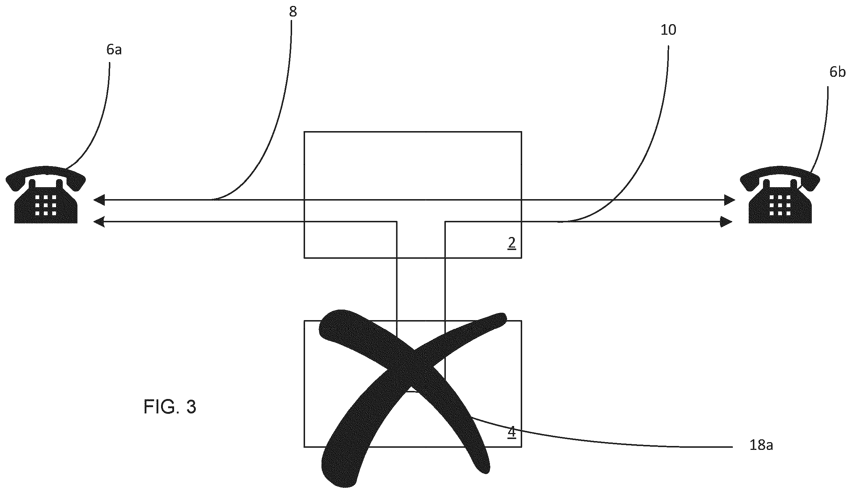

After establishment, FIG. 3 illustrates a way in which, as unreliable server is wont to do, the unreliable server, or the connection to it, suffers a failure or problem that would inhibit further processing. FIG. 3 shows the same call established in FIG. 2, with an error that would prevent further processing.

FIG. 3 depicts a situation in which the unreliable server, 4, suffers a catastrophic failure, depicted by cross 18a, which causes it to stop processing. There are many examples of such failures including the server unexpectedly rebooting, and error in the software that prevents proper processing, the server becoming unreachable, or resource constraints on the server or connection that means all processing ceases to be done in a relevant timeframe for the call. In this situation, the server simply stops responding and thus will not process the media.

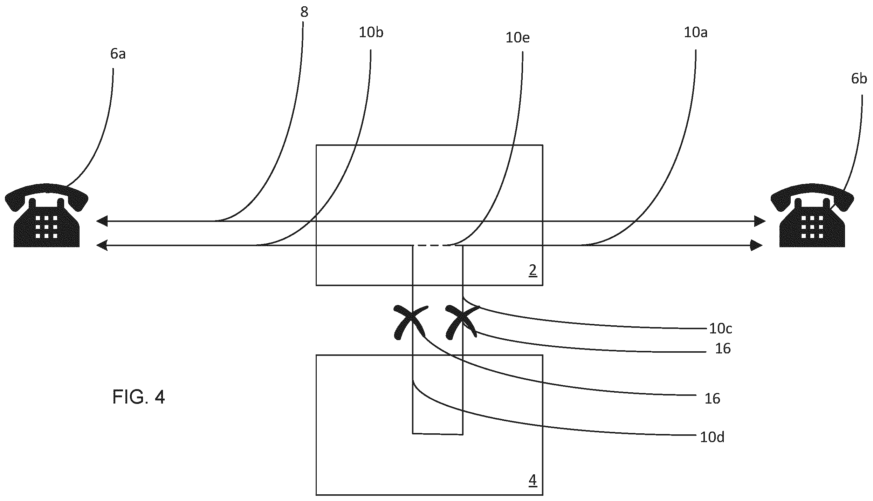

FIG. 4 illustrates the network element, after the failure in FIG 3, where the network element determines to remove the unreliable server from the call. It removes the unreliable server by redirecting the media flow, 10, back along the original path (10a, 10e, 10b), removing, 16, the redirected flow (10c, 10d).

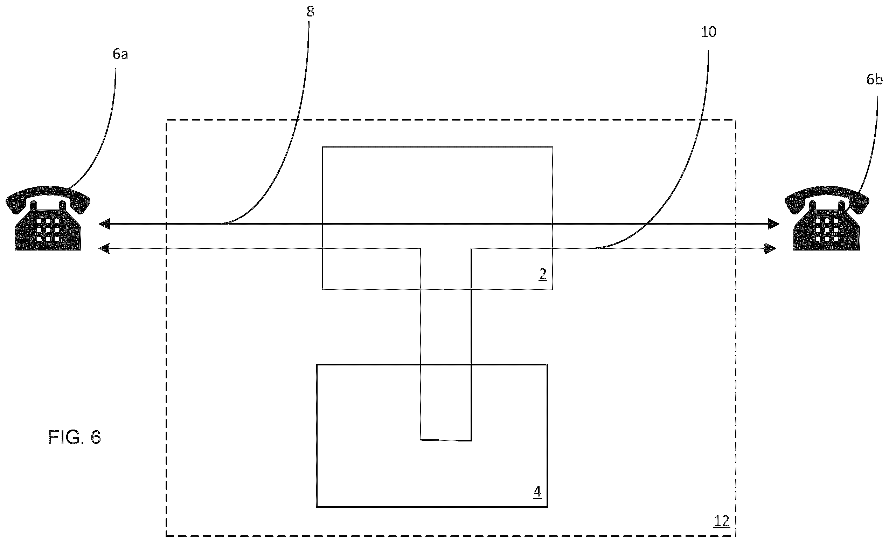

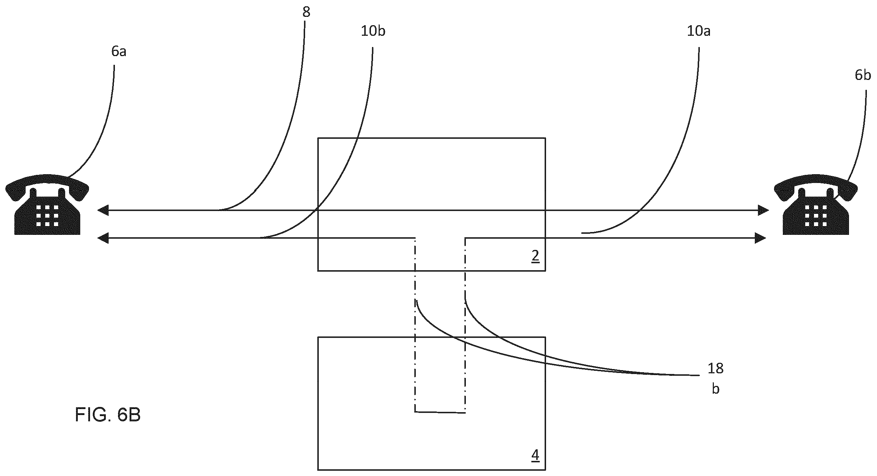

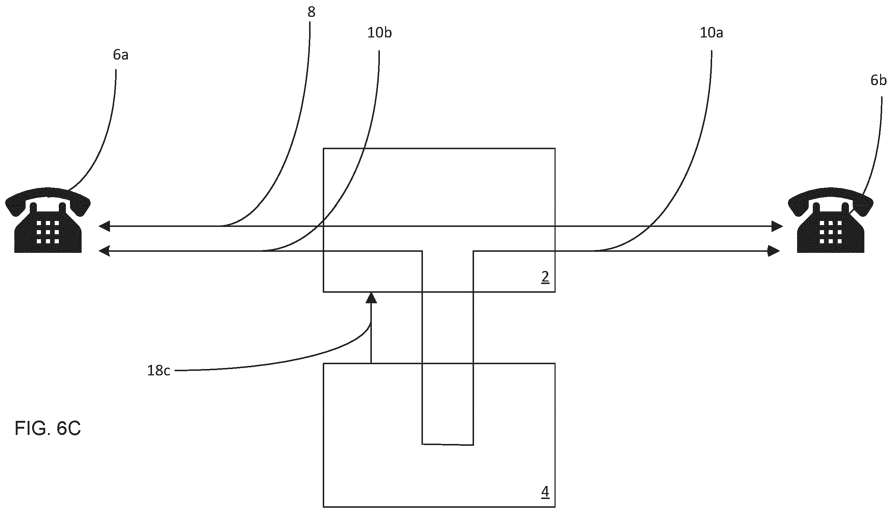

In the SIP framework described above, the unreliable server sends another indication returning the streams to a=sendonly (from the perspective of network element 2), which triggers the network element to return media to the initial relay state, possibly with a unidirectional flow to unreliable server, 4. Note that a=sendonly from the perspective of network element 2 is equivalent to a=recvonly from the perspective of the unreliable server, 4. Which option is used depends on the status of server 4, and which failure case of FIG 3 and FIGs. 6b and 6c has occurred. The network element alternatively has the capability to execute the same change upon detection of a failure in either the connection to the unreliable server, or the server itself, thus allowing the call to continue.

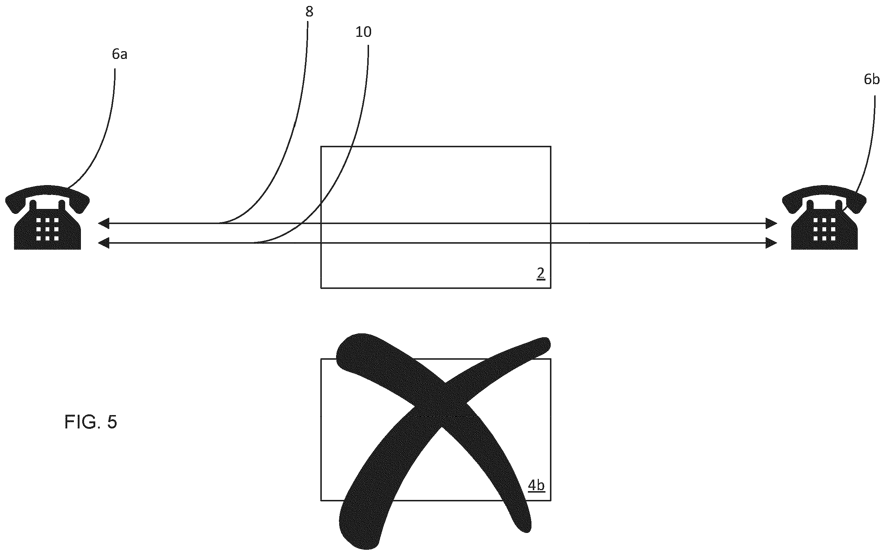

FIG. 5 shows the situation where the call returns to the state it was in originally and continues after the unreliable server is removed from the call. Alternatively, the call returns to the state in FIG 1b, upon determination that the server is required to continue to receive the forked media. In both cases, as the parties were not involved in the redirection, the redirection and return is neither visible, nor impactful on their call quality.

As can be seen by the combination of FIG 1-5, the signaling flow of the call is not interrupted, whilst the unreliable server is given access to the media to apply the processing to. As the signaling is retained by the network element, and the signaling flow path is unchanged, the additional unreliable server is never an equal party to the call (or a full party to the call), and failure of the unreliable server is therefore not fatal to the call.

As will be understood to skilled persons, there are several alternatives to various aspects described above.

Whilst the precise functionality offered by the unreliable server is not relevant, the additional functionality offered by the unreliable server contributes to its unreliability, such as a server offering a call service based on artificial intelligence. As artificial intelligence is processor intensive, it is prone to lead to resource constraints or timeouts that mean the server is likely to suffer failures. Alternatively, the server could be unreliable due to being implemented in the cloud.. In this case, the fact that the cloud does not offer telephony grade reliability, and that the connection between the service provider and the cloud are likely to include a longer distance, could both contribute to issues with the unreliable server.

Access to the media of the call permits several different services which entail interacting with a call's media flow. These generally involve altering or adding to the media flow, such as generating contextual announcements, or adding media for one or both parties of the call. This is done by altering or completely replacing the body of the packets that are flowing along the media flow, or alternatively by completely replacing the media flow with a different media flow in one or both directions. Examples of such services include the unreliable server being configured to apply fraud detection metrics to the call and alert the second party if the first party meets a predetermined measure of likelihood of fraud. This is done via an out-of-band message, or by playing an audio warning to the potentially defrauded party if fraud is detected.

Similarly, this method allows the unreliable server to perform linguistic translation for the first party on the call, and provide translated media for the second party without "playing back" to the first to avoid distraction or confusion. Both of the latter are facilitated by use of artificial intelligence to provide the review of the media against fraud metrics, or to provide the translation. Both equally require an often unreliable server to be given access to the media of the call, but not the signaling.

In some such cases, the default configuration is to add the unreliable server to every call in the network, and only remove it if problems occur or the unreliable server indicates that it is to be removed. For example, the server is added by default to perform initial monitoring and warn as early as possible if fraud is detected, but removed once it determines the call falls below a predetermined likelihood of being fraudulent. In this case, the call proceeds as described above, but with the determination to redirect the media being made in every case by default.

FIG 6 indicates a network configuration where the unreliable server is part of the telephony network, and thus the deployment is kept within the boundaries of the wider service provider network.

FIG 6b and FIG 6c indicate failure states that cause the unreliable server to be removed from the call. FIG 6b depicts a case where, either due to an error with the unreliable server, 4, or due to a failure in the connections to this sever, dashed line 18b, the media flow loses packets or the packets are unacceptably delayed. In some examples, this is detected by the network element, 2, detecting a degradation in a measure of media quality applied to the media flow, or another device in the call path and communicated to the network element.

As in FIG 6c, the unreliable server, 4, itself could notify the network element, 2, by means of a separate connection, 18c, that it has suffered an error or is resource constrained, or otherwise sends an indication that it is to be removed from the media path. This may also be the case if the unreliable server either determines it has no role in the call, or has successfully completed processing and no longer needs to be in the call. This latter supports the situation where the entire network is being monitored by a further device, such as an orchestration server, which detects failures or connection issues and notifies the network element to cease using the unreliable server.

In each of these cases, after the failure, the network element 2 determines that the unreliable server 4 is to be removed and will do so, as depicted in FIG. 4 and 5.

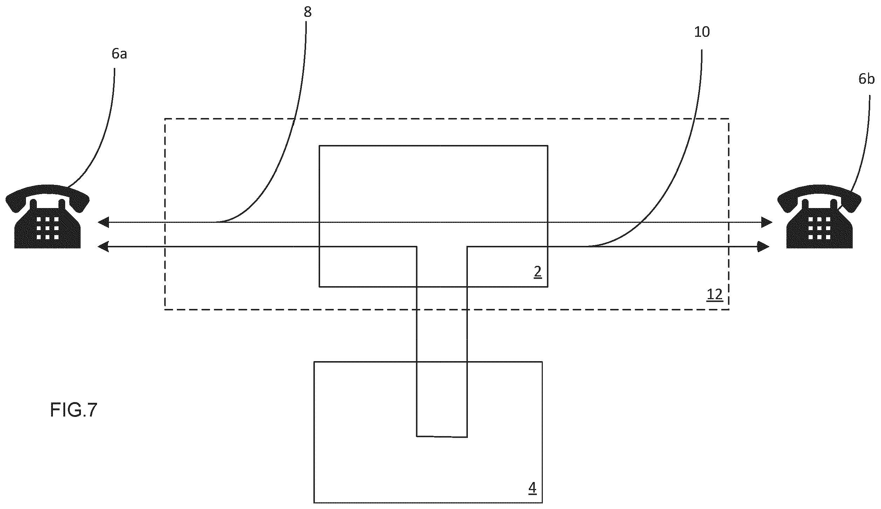

FIG. 7 shows an arrangement where the network element 2 is part of a service provider's network, and the server is unreliable by virtue of being in a cloud compute environment.

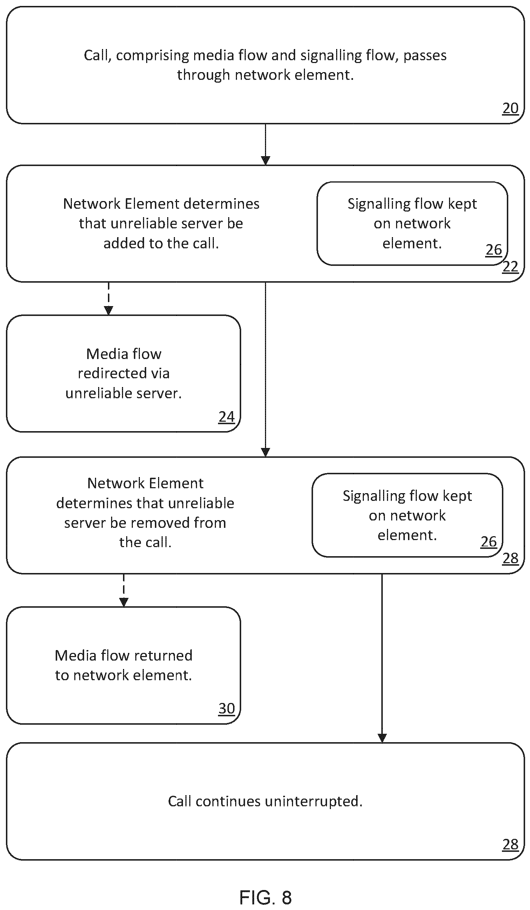

FIG. 8 is a flow diagram of a method performed by a network element such as network element 2 of the examples described above. The network element passes 20 a call comprising media flow and signaling flow through the network element. The call is from a first party to a second party and flows on a path referred to as an original call path, from the first party to the network element and from the network element to the second party. The network element may be a session border controller, a proxy or any other network element suitable for use in a call path.

The network element determines 22 that a server is to be added to the call. The determination is made using rules or other criteria such as: adding the server to every call that passes through the network element 2, adding the server in response to a request from an orchestrator of the telecommunications network, adding the server in response to a request from the server itself, adding the server in response to characteristics of the call, or in other ways. In response to determining that a server is to be added to the call the network element redirects 24 the media flow of the call that has been received from the first party via the server; that is the media flow is redirected 24 from the network element to the server and from the server back to the network element. The media flow then continues from the network element to the second party. The signaling flow is not redirected; the signaling flow is received from the first party and sent directly to the second party without going through the server.

In response to the network element 2 determining that the server is to be removed from the call 28 the network element 2 returns the media flow to the original path of the call i.e. from the first party to the network element 2 and from the network element 2 to the second party without going via the server. Thus the call continues 28 uninterrupted since the signaling flow remained on the original call path throughout. There are a variety of different ways the network element 2 determines that the server is to be removed from the call. In some cases the server itself detects a fault or performance drop in its behaviour or behaviour of a communications link between it and the network element; the server then sends a request to the network element 2 asking to be removed from the call or giving details of the fault or performance drop. In some cases an orchestrator of the telecommunications network sends a request to the network element 2 instructing the network element 2 to remove the server from the call. In some cases the network element 2 detects a round trip time between itself and the server exceed a threshold and in response removes the server from the call. In some cases the network element 2 detects telemetry data about the server or a communications link between itself and the server and in response to the telemetry data meeting criteria removes the server from the call. In some cases the network element receives information from another node of the communications network indicating performance drop or fault of the server or a communications link with the server and in response the network element removes the server from the call.

The call in the examples described herein may be a pure VOIP call between two VOIP clients, however the technology may also be implemented in a network with non-VOIP endpoints. In this case, as is common in modern networks, the call received by the network edge network elements would be converted from the existing format to a VOIP format for network processing. For example, a media gateway may receive an analog call, process it into a VOIP flow, which then comprises the signaling and media flow as depicted.

Equally, whilst the illustrations focus on a two-party call for simplicity, additional parties may be present in the call. In the multi-party call case, however, as VOIP conference calls can be thought of as a number of two-party calls that are combined by a conferencing network element, this has limited impact on the method. Each or any of these calls passes through a network element which employs the described method.

In the above illustrations, the network is significantly simplified, and in reality there will be a large number of intermediate devices that the call path passes through. The method described may be implemented on any network element which is in the call path. In some networks, the method is implemented in multiple places in the network if, for example, different network elements wish to add different unreliable servers to the network for various reasons.

The term "telephony network", is used to refer to a network operated by a service provider to facilitate telecommunication between various users. Telephony networks, due to their sensitivity and importance to society, are engineered for very high levels of reliability (the standard is "Five Nines" - 99.999% availability) and thus the network element is expected to be of a similarly high standard of reliability.

The unreliable server, therefore, is "unreliable" when measured against this standard and when applied to telephony grade networks. There are many possible ways a server can be unreliable, some of which are detailed above, but any way in which a server, connections to it, or similar are more prone to failure than the rest of the network would render the server to be unreliable. It is also the case that a server may only be unreliable in some circumstances, such as high load or when network issues are occurring, in which case this server may appear reliable to many metrics, but still require this method to be safely added to a call. In some cases, a server may be suspected or of higher risk of unreliability, without actually being unreliable in practice, as, for example, a manufacturer or provider may not wish to commit to a level of reliability required for a telephony network. The methods described herein may be used where the potential of unreliability is a risk that the telephony network does not wish to take on, and so the server may still be classed as an unreliable server if its reliability is not known or well understood. Equally, a server's reliability may be impacted both by unexpected outages, and expected or planned outages, as both would impact the call flow.

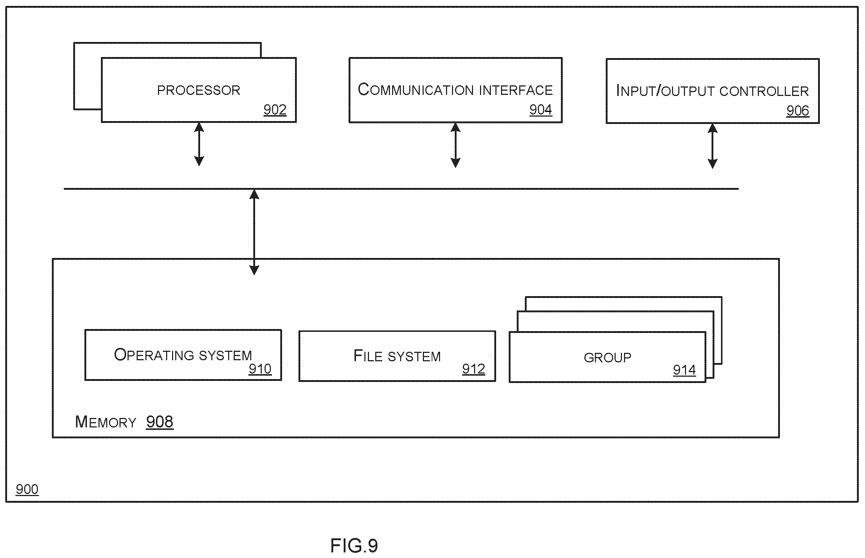

FIG. 9 illustrates various components of an exemplary computing-based device 900 which are implemented as any form of a computing and/or electronic device, and in which examples of a network element may be implemented.

Computing-based device 900 comprises one or more processors 902 which are microprocessors, controllers or any other suitable type of processors for processing computer executable instructions to control the operation of the device in order to fork a media flow or redirect a media flow of a VoIP call. In some examples, for example where a system on a chip architecture is used, the processors 902 include one or more fixed function blocks (also referred to as accelerators) which implement a part of the method of forking a media flow or redirecting a media flow in hardware (rather than software or firmware). Platform software comprising an operating system 910 or any other suitable platform software is provided at the computing-based device to enable application software to be executed on the device. In an example the computing-based device 900 comprises a plurality of groups of containers 914 that implement part of a telecoms service. File system 912 is in a memory 908 of the computing-based device.

The computer executable instructions are provided using any computer-readable media that is accessible by computing based device 900. Computer-readable media includes, for example, computer storage media such as memory 908 and communications media. Computer storage media, such as memory, includes volatile and non-volatile, removable and non-removable media implemented in any method or technology for storage of information such as computer readable instructions, data structures, program modules or the like. Computer storage media includes, but is not limited to, random access memory (RAM), read only memory (ROM), erasable programmable read only memory (EPROM), electronic erasable programmable read only memory (EEPROM), flash memory or other memory technology, optical storage, magnetic storage, or any other non-transmission medium that is used to store information for access by a computing device. In contrast, communication media embody computer readable instructions, data structures, program modules, or the like in a modulated data signal, such as a carrier wave, or other transport mechanism. As defined herein, computer storage media does not include communication media. Therefore, a computer storage medium should not be interpreted to be a propagating signal per se. Although the computer storage media (memory 908) is shown within the computing-based device 900 it will be appreciated that the storage is, in some examples, distributed or located remotely and accessed via a network or other communication link (e.g. using communication interface 904). The computing-based device implements a network element which is able to communicate with other network elements of a telecommunications network using communication interface 904.

Alternatively or in addition to the other examples described herein, examples include any combination of the following clauses:
Clause A. A network element for use in a telephony network comprising:
   a processor;
   a memory storing instructions that, when executed by the processor, perform a method comprising:
      receiving a call from a first party, and sending the call to a second party on a path referred to as an original path, the call comprising a signaling flow and a media flow;
      determining a server is to be added to the call by virtue of a message received from the server;
      adding the server to the call by redirecting the media flow from the network element to the server, and then from the server to the network element;
      determining that the server is to be removed from the call by any of: receiving a request from an orchestrator, receiving information about a failure of the server, receiving
      information about a performance drop in a communications link between the server and the network element;
      in response to determining that the server is to be removed from the call, returning the media flow to the original path of the call; and
      maintaining the signaling flow on the original path during the redirecting of the media flow from the network element to the server.
Clause B. The network element according to clause A wherein the call continues without interruption during performing of the method.
Clause C. The network element according to any preceding clause where, prior to determining that the server be added to the call, the network element sends a copy of both the media flow and the signaling flow to the server such that the server can determine when to send the message to the network element.
Clause D. A network element according to any preceding clause where the network element is a session border controller.
Clause E. A network element according to any preceding clause wherein adding the server to the call enables a call service incorporating artificial intelligence to be applied to the call.
Clause F. A network element according to any preceding clause wherein adding the server comprises adding a cloud computing server.
Clause G. A network element according to any preceding clause wherein adding the server to the call enables fraud detection metrics to be applied the call.
Clause H. A network element according to any preceding clause wherein adding the server to the call comprises enabling the server to add contextual announcements to the media flow.
Clause I. A network element according to any preceding clause wherein adding the server to the call enables the server to alter the media flow of the call.
Clause J. A network element according to clause I where altering the media flow of the call entails media being added to the media flow in one direction only, such that only one party on the call receives the added media.
Clause K. A network element according to any preceding clause wherein adding the server to the call enables the server to translate media originating from the first party and to provide translated media to the second party.
Clause L. A method performed by a network element in a telephony network, the method comprising:
   using the network element in an original path of a call, the call comprising a signaling flow and a media flow;
   receiving a message that indicates a server is to be added to the call;
   in response to the message, adding the server to the call by redirecting the media flow from the network element, via the server, whilst keeping the signaling flow along the original path of the call;
   determining, after addition, that the server is to be removed from the call, by receiving a further message or by receiving information about a failure of the server, or by receiving information about a performance drop in a communications link between the server and the network element, and, in response to the determining, returning the media to the original path of the call.
Clause M. The method according to clause L where determining that the server is to be removed by receiving information about a failure of the server comprises the network element detecting a problem on the server.
Clause N. The method according to clause M where the problem is failure of the server.
Clause O. The method according to clause L where determining that the server is to be removed by receiving information about a performance drop in a communications link between the server and the network element comprises using the network element to detect a degradation in a measure of media quality applied to the media flow.
Clause P. The method according to clause O where determining that the server is to be removed from the call comprises receiving the further message at the network element.
Clause Q. The method according to clause P where the further message is received from an orchestration server that monitors the telephony network.
Clause R. The method according to any of clauses L to Q where the media flow is redirected by receiving an a= sendrecvSession Description Protocol attribute instructing the network element to redirect the media.
Clause S. A 5G telephony network comprising;
   a network element comprising a processor and a memory, the memory storing instructions that, when executed by the processor, perform a method comprising:
   determining that a server is to be added to a call which is ongoing over a 5G telephony network by determining that the call requires call services provided by the server; adding the server to the call by redirecting a media flow of the call to flow from the network element via the server;
   determining that the server is to be removed from the call by any of: receiving a request from an orchestrator, receiving information about a failure of the server, receiving information about a performance drop in a communications link between the server and the network element;
   in response to determining that the server is to be removed from the call, returning the media flow to an original path of the call; and
   maintaining the signaling flow on the original path during the redirecting of the media flow from the network element to the server.
Clause T. The system according to clause S where the server is added to every call handled by the network element.

The methods described herein are performed, in some examples, by software in machine readable form on a tangible storage medium e.g. in the form of a computer program comprising computer program code means adapted to perform all the operations of one or more of the methods described herein when the program is run on a computer and where the computer program may be embodied on a computer readable medium. The software is suitable for execution on a parallel processor or a serial processor such that the method operations may be carried out in any suitable order, or simultaneously.

Those skilled in the art will realize that storage devices utilized to store program instructions are optionally distributed across a network. For example, a remote computer is able to store an example of the process described as software. A local or terminal computer is able to access the remote computer and download a part or all of the software to run the program. Alternatively, the local computer may download pieces of the software as needed, or execute some software instructions at the local terminal and some at the remote computer (or computer network). Those skilled in the art will also realize that by utilizing conventional techniques known to those skilled in the art that all, or a portion of the software instructions may be carried out by a dedicated circuit, such as a digital signal processor (DSP), programmable logic array, or the like.

Any range or device value given herein may be extended or altered without losing the effect sought, as will be apparent to the skilled person.

Although the subject matter has been described in language specific to structural features and/or methodological acts, it is to be understood that the subject matter defined in the appended claims is not necessarily limited to the specific features or acts described above. Rather, the specific features and acts described above are disclosed as example forms of implementing the claims.

It will be understood that the benefits and advantages described above may relate to one embodiment or may relate to several embodiments. The embodiments are not limited to those that solve any or all of the stated problems or those that have any or all of the stated benefits and advantages. It will further be understood that reference to 'an' item refers to one or more of those items.

The operations of the methods described herein may be carried out in any suitable order, or simultaneously where appropriate. Additionally, individual blocks may be deleted from any of the methods without departing from the scope of the subject matter described herein. Aspects of any of the examples described above may be combined with aspects of any of the other examples described to form further examples without losing the effect sought.

The term 'comprising' is used herein to mean including the method blocks or items identified, but that such blocks or items do not comprise an exclusive list and a method or apparatus may contain additional blocks or items.

It will be understood that the above description is given by way of example only and that various modifications may be made by those skilled in the art. The above specification, examples and data provide a complete description of the structure and use of exemplary embodiments. Although various embodiments have been described above with a certain degree of particularity, or with reference to one or more individual embodiments, those skilled in the art could make numerous alterations to the disclosed embodiments without departing from the scope of this specification.

The methods herein, which involve the observation of people in their daily telecommunications calls, may and should be enacted with utmost respect for personal privacy. Accordingly, the methods presented herein are fully compatible with opt-in participation of the persons being observed and with use of encryption and other security technologies. In embodiments where personal data is collected on a local system and transmitted to a remote system for processing, that data can be anonymized in a known manner. In other embodiments, personal data may be confined to a local system, and only non-personal, summary data transmitted to a remote system.

## Claims

1. A network element (2) for use in a telephony network comprising:
a processor (902);
a memory (908) storing instructions that, when executed by the processor (902), perform a method comprising:
receiving a call from a first party (6a), and sending the call to a second party (6b) on a path referred to as an original path, the call comprising a signaling flow (8) and a media flow (10);
determining a server (4) is to be added to the call by virtue of a message received from the server (4);
adding the server (4) to the call by redirecting the media flow (10) from the network element (2) to the server (4), and then from the server (4) to the network element (2);
determining that the server (4) is to be removed from the call by any of: receiving a request from an orchestrator, receiving information about a failure of the server (4), receiving information about a performance drop in a communications link between the server (4) and the network element (2);
in response to determining that the server (2) is to be removed from the call, returning the media flow (10) to the original path of the call; and
maintaining the signaling flow (8) on the original path during the redirecting of the media flow (10) from the network element (2) to the server (4).

2. The network element according to claim 1 wherein the call continues without interruption during performing of the method.

3. The network element according to claim 1 or claim 2 where, prior to determining that the server be added to the call, the network element sends a copy of both the media flow and the signaling flow to the server such that the server can determine when to send the message to the network element.

4. A network element according to any preceding claim where the network element is a session border controller.

5. A network element according to any preceding claim wherein adding the server to the call enables a call service incorporating artificial intelligence to be applied to the call.

6. A network element according to any preceding claim wherein adding the server comprises adding a cloud computing server.

7. A network element according to any preceding claim wherein adding the server to the call enables fraud detection metrics to be applied the call.

8. A network element according to any preceding claim wherein adding the server to the call comprises enabling the server to add contextual announcements to the media flow.

9. A network element according to any preceding claim wherein adding the server to the call enables the server to alter the media flow of the call.

10. A network element according to claim 9 where altering the media flow of the call entails media being added to the media flow in one direction only, such that only one party on the call receives the added media.

11. A network element according to claim 1 wherein adding the server to the call enables the server to translate media originating from the first party and to provide translated media to the second party.

12. A method performed by a network element (2) in a telephony network, the method comprising:
using the network element (2) in an original path of a call, the call comprising a signaling flow (8) and a media flow (10);
receiving a message that indicates a server (4) is to be added to the call;
in response to the message, adding the server (4) to the call by redirecting the media flow (10) from the network element (2), via the server (4), whilst keeping the signaling flow (10) along the original path of the call;
determining, after addition, that the server (4) is to be removed from the call, by receiving a further message or by receiving information about a failure of the server (4), or by receiving information about a performance drop in a communications link between the server (4) and the network element (2); and,
in response to the determining, returning the media to the original path of the call.

13. The method according to claim 12 where determining that the server is to be removed by receiving information about a failure of the server comprises the network element detecting a problem on the server.

14. The method according to claim 13 where the problem is failure of the server.

15. The method according to claim 12 where determining that the server is to be removed by receiving information about a performance drop in a communications link between the server and the network element comprises using the network element to detect a degradation in a measure of media quality applied to the media flow.
